(19) Europäisches Patentamt
European Patent Office
Office européen des brevets

(11) EP 1 024 166 A1

(12) # EUROPÄISCHE PATENTANMELDUNG

(43) Veröffentlichungstag:
**02.08.2000 Patentblatt 2000/31**

(51) Int. Cl.[7]: **C08K 5/5313**, C08K 3/32, C08K 3/34, C08K 5/19, C08K 5/3472, C08K 5/3477

(21) Anmeldenummer: **00100223.7**

(22) Anmeldetag: **12.01.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **30.01.1999 DE 19903709**

(71) Anmelder: **Clariant GmbH**
**65929 Frankfurt am Main (DE)**

(72) Erfinder:
- **Schlosser, Elke, Dipl.-Ing.**
  **86163 Augsburg (DE)**
- **Nass, Bernd, Dipl.-Ing.**
  **86152 Augsburg (DE)**
- **Wanzke, Wolfgang, Dr.**
  **86405 Meitingen (DE)**

(54) **Flammschutzmittel-Kombination für thermoplastische Polymere II**

(57) Die Erfindung betrifft eine Flammschutzmittel-Kombination für thermoplastische Polymere, die als Komponente A ein Salz von 1-Hydroxy-dihydrophospholoxiden gemäß der Formel (Ia) oder Formel (Ib) und/oder 1-Hydroxyphospholanoxiden gemäß der Formel (II) enthält,

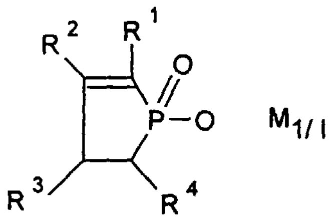

(Ia)

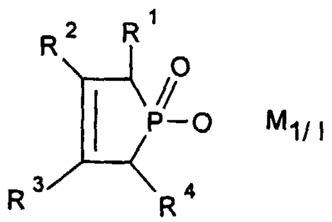

(Ib)

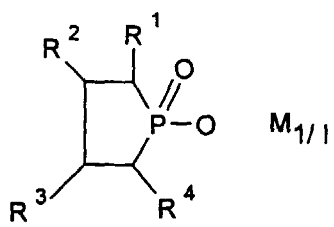

(II)

worin

| | |
|---|---|
| $R^1$ bis $R^4$ | gleich oder verschieden sind und Wasserstoff oder $C_1$-$C_{12}$-Alkyl, bevorzugt $C_1$-$C_4$-Alkyl, insbesonders Methyl oder Ethyl; |
| M | ein Metall aus der zweiten oder dritten Haupt- oder Nebengruppe des Periodensystems, wie Magnesium, Calcium, Zink, Aluminium, bevorzugt Aluminium, |
| l | die Zahlen 1, 2 oder 3 |

bedeuten und die als Komponente B eine synthetische anorganische Verbindung und/oder ein mineralisches Produkt enthält.

EP 1 024 166 A1

## Beschreibung

Die Erfindung betrifft eine Flammschutzmittel-Kombination für thermoplastische Polymere und ihre Verwendung.

Salze von Phosphinsäuren (Phosphinate) haben sich als wirksame flammhemmende Zusätze für Polymere erwiesen, dies betrifft sowohl die Alkalimetallsalze (DE-A-22 52 258) als auch Salze anderer Metalle (DE-A-24 47 727).

Calcium- und Aluminiumphosphinate sind in Polyestern als besonders wirksam beschrieben worden und beeinträchtigen die Materialeigenschaften der Polymerformmassen weniger als die Alkalimetallsalze (EP-A-0 699 708).

Auch alicyclische Phosphinate, wie z. B. die Salze von 1-Hydroxyphospholanoxiden haben flammhemmende Eigenschaften, und sind besonders für Polyester und Polamide geeignet (EP-A-0 794 191).

Darüberhinaus wurden synergistische Kombinationen von den genannten Phosphinaten mit bestimmten stickstoffhaltigen Verbindungen gefunden, die in einer ganzen Reihe von Polymeren als Flammschutzmittel effektiver wirken, als die Phosphinate allein (PCT/EP97/01664 sowie DE-A-197 34 437 und DE-A-197 37 727).

Es wurde nun überraschend gefunden, daß die Flammschutzwirkung der verschiedenen Phosphinate in thermoplastischen Polymeren auch durch Zusätze von kleinen Mengen anorganischer Verbindungen, die keinen Stickstoff enthalten, deutlich verbessert werden kann. Darüberhinaus wurde gefunden, daß die genannten Zusätze auch die Flammschutzwirkung von Phosphinaten in Kombination mit stickstoffhaltigen Synergisten verbessern können.

Die Erfindung betrifft daher eine Flammschutzmittel-Kombination für thermoplastische Polymere, die als Komponente A ein Salz von 1-Hydroxydihydrophospholoxiden gemäß der Formel (Ia) oder Formel (Ib) und/oder 1-Hydroxyphospholanoxiden gemäß der Formel (II) enthält,

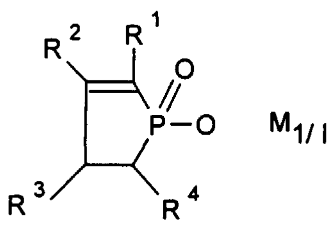

(Ia)

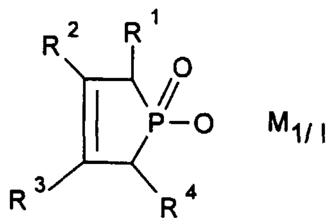

(Ib)

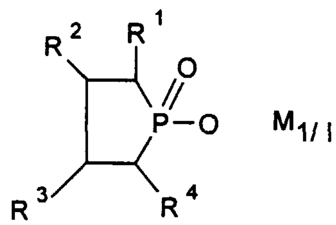

(II)

worin

| | |
|---|---|
| $R^1$ bis $R^4$ | gleich oder verschieden sind und Wasserstoff oder $C_1$-$C_{12}$-Alkyl, linear oder verzweigt; |
| M | ein Metall aus der zweiten oder dritten Haupt- oder Nebengruppe des Periodensystems, wie Magnesium, Calcium, Zink oder Aluminium; |
| I | die Zahlen 1, 2 oder 3 |

bedeuten und die als Komponente B eine synthetische anorganische Verbindung und/oder ein mineralisches Produkt enthält.

Bevorzugt sind $R^1$ bis $R^4$ gleich oder verschieden sind und bedeuten Wasserstoff oder $C_1$-$C_4$-Alkyl, linear oder verzweigt.

Besonders bevorzugt sind $R^1$ bis $R^4$ gleich oder verschieden sind und bedeuten Methyl oder Ethyl.

Bevorzugt handelt es sich bei dem Metall um Magnesium, Calcium, Zink und/oder Aluminium

Bevorzugt handelt es sich bei der Komponente B um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Bevorzugt handelt es sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver.

Bevorzugt handelt es sich bei den Magnesiumverbindungen um Magnesiumhydroxid, Hydrotalcite, Magnesium-Carbonate oder Magnesium-Calcium-Carbonate.

Bevorzugt handelt es sich bei rotem Phosphor um elementaren roten Phosphor oder um Zubereitungen, in denen der Phosphor oberflächlich mit niedermolekularen, flüssigen Substanzen wie Silikonöl, Paraffinöl oder Estern der Phthalsäure oder Adipinsäure oder mit polymeren oder oligomeren Verbindungen, z.B. mit Phenolharzen oder Aminoplasten sowie Polyurethanen beschichtet ist.

Bevorzugt handelt es sich bei den Zinkverbindungen um Zinkoxid, -stannat, -hydroxystannat, -phosphat, -borat oder sulfide.

Bevorzugt handelt es sich bei den Aluminiumverbindungen um Aluminiumhydroxid oder -phosphat.

Bevorzugt enthält die erfindungsgemäße Flammschutzmittel-Kombination als weitere Komponente C Stickstoffverbindungen.

Bevorzugt handelt es sich bei den Stickstoffverbindungen um solche der Formeln (III) bis (VIII) oder Gemische davon

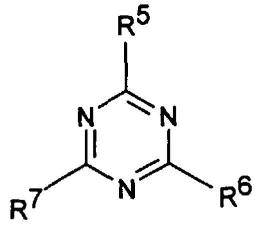

(III)

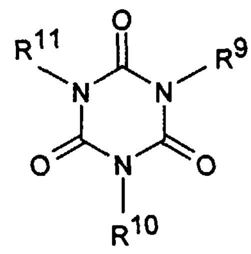

(IV)

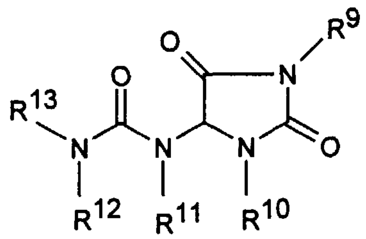

(V)

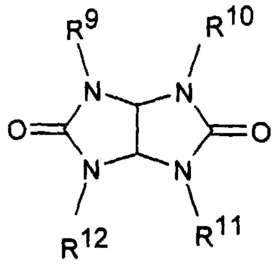

(VI)

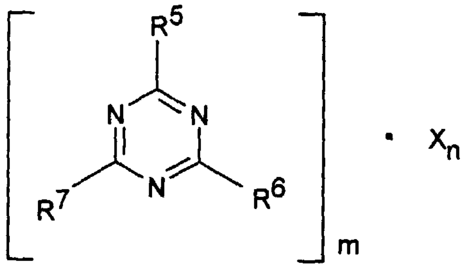

(VII)

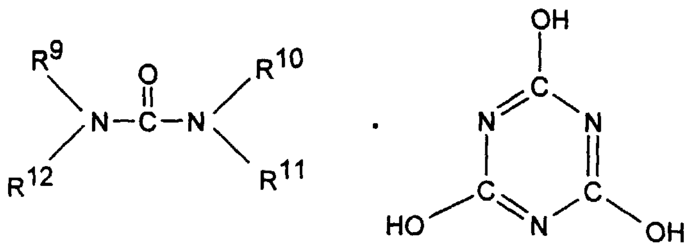

(VIII)

worin

| | |
|---|---|
| $R^5$ bis $R^7$ | Wasserstoff, $C_1$-$C_8$-Alkyl, $C_5$-$C_{16}$-Cycloalkyl oder -Alkylcycloalkyl, möglicherweise substituiert mit einer Hydroxy- oder einer $C_1$-$C_4$-Hydroxyalkyl-Funktion, $C_2$-$C_8$-Alkenyl, $C_1$-$C_8$-Alkoxy, -Acyl, -Acyloxy, $C_6$-$C_{12}$-Aryl oder -Arylalkyl, -$OR^8$ und -$N(R^8)R^9$, sowie N-alicyclisch oder N-aromatisch, |
| $R^8$ | Wasserstoff, $C_1$-$C_8$-Alkyl, $C_5$-$C_{16}$-Cycloalkyl oder -Alkylcycloalkyl, möglicherweise substituiert mit einer Hydroxy- oder einer $C_1$-$C_4$-Hydroxyalkyl-Funktion, $C_2$-$C_8$-Alkenyl, $C_1$-$C_8$-Alkoxy, -Acyl, -Acyloxy oder $C_6$-$C_{12}$-Aryl oder -Arylalkyl, |
| $R^9$ bis $R^{13}$ | die gleichen Gruppen wie $R^8$ sowie -O-$R^8$, m und n unabhängig voneinander 1, 2, 3 oder 4, |
| X | Säuren, die Addukte mit Triazinverbindungen (III) bilden können, bedeuten; |

oder um oligomere Ester des Tris(hydroxyethyl)isocyanurats mit aromatischen Polycarbonsäuren oder um stickstoffhaltige Phosphate der Formeln $(NH_4)_y H_{3-y} PO_4$ bzw. $(NH_4 PO_3)_z$, mit y gleich 1 bis 3 und z gleich 1 bis 10.000.

Bevorzugt handelt es sich bei der Komponente C um Benzoguanamin, Tris(hydroxyethyl)isocyanurat, Allantoin, Glycoluril, Melamin, Melamincyanurat, Melaminphosphat, Dimelaminphosphat und/oder Melaminpyrophosphat.

Die Erfindung betrifft auch die Verwendung der erfindungsgemäßen Flammschutzmittel-Kombination zur flammfesten Ausrüstung von thermoplastischen Polymeren. Unter thermoplastischen Polymeren werden laut Hans Domininghaus in „Die Kunststoffe und ihre Eigenschaften", 5. Auflage (1998), S. 14, Polymere verstanden, deren Molekülketten keine oder auch mehr oder weniger lange und in der Anzahl unterschiedliche Seitenverzweigungen aufweisen, die in der Wärme erweichen und nahezu beliebig formbar sind.

Bevorzugt handelt es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol). Polystyrol-HI ist ein Polystyrol mit erhöhter Schlagzähigkeit.

Besonders bevorzugte thermoplastische Polymere sind Polyamide, Polyester und ABS.

Thermoplastische Polymere, die die erfindungsgemäßen Flammschutzmittel-Kombinationen und gegebenenfalls Füll- und Verstärkungsstoffe und/oder andere Zusätze, wie unten definiert, enthalten, werden im folgenden als Kunststoff-Formmassen bezeichnet.

Bei der bereits weiter vorne genannten Komponente B handelt es sich um eine synthetische anorganische Verbindung und/oder um ein mineralisches Produkt aus den nachfolgend genannten Gruppen:

Sauerstoffverbindungen des Siliciums, wie Salze und Ester der Orthokieselsäure und deren Kondensationsprodukte (Silikate). Eine Übersicht über geeignete Silikate wird beispielsweise in Riedel, Anorganische Chemie, 2.Aufl., S. 490 - 497, Walter de Gruyter, Berlin-New York 1990 gegeben. Von besonderem Interesse sind dabei Phyllosilikate (Blatt-Silikate, Schichtsilikate) wie etwa Talk, Kaolinit und Glimmer und die Gruppe der Bentonite und Montmorinollite, sowie Tektosilikate (Gerüstsilikate) wie z.B. die Gruppe der Zeolithe. Daneben kann auch Siliciumdioxid in Form von hochdisperser Kieselsäure eingesetzt werden.

Die Kieselsäure kann dabei nach einem pyrogenen oder nach einem naßchemischen Verfahren hergestellt sein. Die genannten Silikate bzw. Kieselsäuren können zur Erzielung bestimmter Oberflächeneigenschaften gegebenenfalls mit organischen Modifizierungsmitteln ausgerüstet sein.

Ebenfalls als Komponente B eingesetzt werden können Glas-, Glas-Keramik- und Keramik-Pulver unterschiedlicher Zusammensetzung, wie sie z. B. in "Ullmann's Encyclopedia of Industrial Chemistry", $5^{th}$ Edition, Vol. A 12 (1989), S. 372-387 (Glas) bzw. S. 443-448 (Glas-Keramik) beschrieben sind. Entsprechende Keramische Materialien sind in Vol. 6 (1986) auf S. 12-18 (Commercial Ceramic Clays) beschrieben. Es können sowohl Gläser und/oder Keramiken mit definiertem Schmelzpunkt verwendet werden, als auch Mischungen von Produkten mit einem breiten Schmelzbereich, etwa Keramik-Fritten, wie sie zur Herstellung von Glasuren eingesetzt werden. Solche Fritten oder Mischungen mehrerer Fritten können auch zusätzlich Glas-, Basalt- oder keramische Fasern enthalten. Mischungen dieser Art sind z. B. in der EP 0 287 293 B1 beschrieben.

Ebenfalls als Komponente B eingesetzt werden können Magnesiumverbindungen, wie Magnesiumhydroxid sowie Hydrotalcite der allgemeinen Formel

$$Mg_{(1-a)}Al_a(OH)_2 A_{a/2} \cdot pH_2O,$$

wobei

- A für die Anionen $SO_4^{2-}$ oder $CO_3^{2-}$ steht,
- a größer 0 und kleiner/gleich 0,5 ist und
- p die Anzahl der Wassermoleküle des Hydrotalcits bedeuten und einen Wert zwischen 0 und 1 darstellt.

Hydrotalcite, bei denen A das Anion $CO_3^{2-}$ repräsentiert, und $0{,}2 \le a \le 0{,}4$ gilt, sind bevorzugt.

Die Hydrotalcite können sowohl natürliche Hydrotalcite, die gegebenfalls durch entsprechende chemische Behandlung modifiziert sein können, als auch synthetisch hergestellte Produkte sein.

Ebenfalls als Komponente B eingesetzt werden können Metallcarbonate von Metallen der zweiten Hauptgruppe des Periodensystems und deren Mischungen.

Geeignet sind Magnesium-Calcium-Carbonate ($b_1$) der allgemeinen Formel

$$Mg_bCa_c(CO_3)_{b+c} \cdot q\ H_2O,$$

wobei

b und c Zahlen von 1 bis 5 bedeuten und $b/c \geq 1$ gilt und $q \geq 0$ ist sowie basische Magnesium-Carbonate ($b_2$) der allgemeinen Formel

$$Mg_d(CO_3)_e(OH)_{2d-2e} \cdot r\ H_2O,$$

wobei
d eine Zahl von 1 bis 6, e eine Zahl größer als 0 und kleiner als 6 bedeutet und $d/e > 1$ gilt und $r \geq 0$ ist.

Besonders geeignet sind Mischungen aus $b_1$ und $b_2$, wobei das Mengenverhältnis von $b_1 : b_2$ im Bereich von 1:1 bis 3:1 liegt.
Die Magnesium-Calcium-Carbonate $b_1$ und basischen Magnesium-Carbonate $b_2$ können sowohl in wasserhaltiger als auch wasserfreier Form und mit oder ohne Oberflächenbehandlung eingesetzt werden. Zu diesen Verbindungstypen gehören die natürlich vorkommenden Mineralien wie Huntit ($b_1$) und Hydromagnesit ($b_2$) und deren Mischungen.

Ebenfalls als Komponente B eingesetzt werden können Zinkverbindungen wie Zinkoxid, -stannat, -hydroxystannat, -phosphate und -sulfide sowie Zinkborate der allgemeinen Formel $f\ ZnO \cdot g\ B_2O_3 \cdot h\ H_2O$, wobei f, g und h Werte zischen 0 und 14 bedeuten.

Die erfindungsgemäßen Flammschutzmittel-Kombinationen können gegebenenfalls als Komponente C eine Stickstoffverbindung der Formel (III) bis (VIII) oder ein Gemisch der durch die Formeln bezeichneten Verbindungen, wie sie in der DE-A-197 37 727 beschrieben - und auf die hier ausdrücklich Bezug genommen wird - sind, enthalten.

Zusätzlich zu den oben genannten können als Komponente C oligomere Ester des Tris(hydroxyethyl)isocyanurats mit aromatischen Polycarbonsäuren, wie sie in EP-A 584 567 beschrieben sind, und stickstoffhaltige Phosphate der Formeln $(NH_4)_y\ H_{3-y}\ PO_4$ bzw. $(NH_4\ PO_3)_z$, wobei y Zahlenwerte von 1 bis 3 annehmen kann und z eine beliebig große Zahl ist (etwa 1 bis 10.000), typischerweise auch als Durchschnittswert einer Kettenlängenverteilung dargestellt, eingesetzt werden.

Geeignete Polymere, in denen die erfindungsgemäße Flammschutzmittel-Kombination wirksam eingesetzt werden kann, sind auch in der internationalen Patentanmeldung PCT/WO 97/01664 auf den Seiten 6 bis 9 beschrieben, worauf hier ausdrücklich Bezug genommen wird.

Als Komponente A können eingesetzt werden: Salze der 1-Hydroxy-dihydrophospholoxide und der 1-Hydroxyphospholanoxide.

Geeignete Salze der 1-Hydroxy-dihydrophospholoxide und der 1-Hydroxyphospholanoxide sind beispielsweise: Die Erdalkali-, Magnesium-, Zink- und Aluminiumsalze von 1-Hydroxy-3-Alkyl-2,3-dihydro-1H-phosphol-1-oxid, 1-Hydroxy-3-methyl-2,5-dihydro-1H-phosphol-1-oxid, 1-Hydroxy-2,3-dihydro-1H-phosphol-1-oxid, 1-Hydroxy-2,5-dihydro-1H-phosphol-1-oxid, 1-Hydroxy-1H-phospholan-1-oxid und 1-Hydroxy-3-methyl-1H-phospholan-1-oxid sowie Gemische dieser Salze. Die Aluminiumsalze sind bevorzugt.

Die Salze können aus den 1-Hydroxy-dihydrophospholoxiden und 1-Hydroxyphospholanoxiden nach bekannten Methoden hergestellt werden, dabei können in wässriger Lösung die Metallcarbonate, Metallhydroxide oder Metalloxide eingesetzt werden. Die 1-Hydroxy-dihydrophospholoxide sind nach bekannten Verfahren aus den 1-Chlordihydrophospholoxiden zugänglich, die beispielsweise entsprechend EP-A-0452755 hergestellt werden können. Aus ihnen können durch Hydrierung die 1-Hydroxy-phospholanoxide hergestellt werden.

Die Menge des den Polymeren zuzusetzenden Salze der 1-Hydroxydihydrophospholoxide und der 1-Hydroxyphospholanoxide der allgemeinen Formeln Ia, Ib bzw. II kann innerhalb weiter Grenzen variieren. Im allgemeinen verwendet man 1 bis 50 Gew.-%, bezogen auf die Kunststoff-Formmasse. Die optimale Menge hängt von der Natur des Polymeren, der Art der Komponenten B und gegebenenfalls C und vom Typ des eingesetzten Salzes der 1-Hydroxydihydrophospholoxide und der 1-Hydroxyphospholanoxide selbst ab und kann durch Versuche leicht bestimmt werden. Bevorzugt sind 3 bis 40, insbesondere 5 bis 30 Gew.-%.

Die Salze der 1-Hydroxy-dihydrophospholoxide und der 1-Hydroxyphospholanoxide gemäß der Erfindung können je nach Art des verwendeten Polymeren und der gewünschten Eigenschaften in verschiedener physikalischer Form angewendet werden. So können die Salze der 1-Hydroxy-dihydrophospholoxide und der 1-Hydroxyphospholanoxide z.B. zur Erzielung einer besseren Dispersion im Polymeren zu einer feinteiligen Form vermahlen werden. Falls erwünscht können auch Gemische verschiedener Salze der 1-Hydroxy-dihydrophospholoxide und der 1-Hydroxyphospholanoxide eingesetzt werden.

Die Salze der 1-Hydroxy-dihydrophospholoxide und der 1-Hydroxyphospholanoxide gemäß der Erfindung sind thermisch stabil, zersetzen die Polymeren weder bei der Verarbeitung noch beeinflussen sie den Herstellprozess der Kunststoff-Formmasse.

Die Salze der 1-Hydroxy-dihydrophospholoxide und der 1-Hydroxyphospholanoxide sind unter Herstellungs- und Verarbeitungsbedingungen für Polymere nicht flüchtig.

Die Menge der den Polymeren zuzusetzenden erfindungsgemäßen anorganischen Verbindungen (Komponente B) kann innerhalb weiter Grenzen variieren. Im allgemeinen verwendet man 0,1 bis 10 Gew.-%, bezogen auf die Kunststoff-Formmasse. Die optimale Menge hängt von der Natur des Polymeren, der Art des eingesetzten Salzes der 1-Hydroxy-dihydrophospholoxide und der 1-Hydroxyphospholanoxide (Komponente A), der gegebenenfalls eingesetzten stickstoffhaltigen Verbindung (Komponente C) sowie vom Typ der anorganischen Verbindung selbst ab. Bevorzugt sind 0,3 bis 5, insbesondere 0,5 bis 3 Gew.-%. Es ist auch möglich eine Kombination der genannten anorganischen Verbindungen zuzusetzen.

Die Menge der den Polymeren zuzusetzenden Stickstoffverbindung (Komponente C) kann innerhalb weiter Grenzen variieren. Im allgemeinen verwendet man 1 bis 30 Gew.-% bezogen auf die Kunststoff-Formmasse. Die optimale Menge hängt von der Natur des Polymeren, der Art des eingesetzten Salzes der 1-Hydroxydihydrophospholoxide und der 1-Hydroxyphospholanoxide (Komponente A), der Art der eingesetzten anorganischen Verbindung (Komponente B) sowie vom Typ der Stickstoffverbindung selbst ab. Bevorzugt sind 3 bis 20, insbesondere 5 bis 15 Gew.-%.

Die flammhemmenden Komponenten A ,B und gegebenenfalls C können in thermoplastische Polymere eingearbeitet werden, indem z. B. alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten A,B und C können auch separat über eine Dosieranlage direkt in das Compoundieraggregat eingebracht werden.

Es ist ebenso möglich, die flammhemmenden Zusätze A, B und C einem fertigen Polmergranulat bzw. -pulver beizumischen und die Mischung direkt auf einer Spritzgußmaschine zu Formteilen zu verarbeiten.

Bei Polyestern beispielsweise können die flammhemmenden Zusätze A, B und C auch bereits während der Polykondensation in die Polyestermasse gegeben werden.

Den Formmassen können neben der erfindungsgemäßen flammhemmenden Kombination aus A, B und gegebenenfalls C auch Füll- und Verstärkungsstoffe wie Glasfasern, Glaskugeln oder Mineralien wie Kreide zugesetzt werden. Zusätzlich können die Formmassen noch andere Zusätze wie Antioxidantien, Lichtschutzmittel, Gleitmittel, Farbmittel, Nukleierungsmittel oder Antistatika enthalten. Beispiele für die verwendbaren Zusätze sind in EP-A-584 567 angegeben.

Die flammwidrigen Kunststoff-Formmassen eignen sich zur Herstellung von Formkörpern, Filmen, Fäden und Fasern, z. B. durch Spritzgießen, Extrudieren oder Verpressen.

Beispiele

1. Eingesetzte Komponenten

Handelsübliche Polymere (Granulat):

Polyamid 6 (PA 6-GV):
®Durethan BKV 30 (Fa. Bayer AG, D) enthält 30 % Glasfasern.
Polybutylenterephthalat (PBT-GV):
®Celanex 2300 GV1/30 (Fa. Hoechst ®Celanese, USA) enthält 30 % Glasfasern.

Flammschutzmittelkomponenten (pulverförmig):

Komponente A:

Aluminiumsalz des 1-Hydroxy-1H-phospholan-1-oxids, im folgenden als PHOLAL bezeichnet.

Komponente B:

CEEPREE (Glas/Keramik-Mischung), Fa. Brunner Mond & Company Ltd. UK DHT Exm 697-2 (Dihydrotalcit), Fa. Süd-Chemie AG, D
FIREBRAKE® ZB (Zinkborat), Fa. US Borax & Chemical Corporation, USA Zinkoxid, Fa. MERCK, D

Komponente C:

Melapur® MC (Melamincyanurat), Fa. DSM Melapur, NL

2. Herstellung, Verarbeitung und Prüfung von flammhemmenden Polymerformmassen

Die Flammschutzmittelkomponenten wurden in dem in den Tabellen angegebenen Verhältnis mit dem Polymergranulat und evtl. Additiven vermischt und auf einem Doppelschnecken-Extruder (Typ Leistritz LSM 30/34) bei Temperaturen von 230 bis 260 °C (PBT-GV) bzw. von 240 bis 280 °C (PA 6-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Toshiba IS 100 EN) bei Massetemperaturen von 240 bis 270 °C (PBT-GV) bzw. von 260 bis 280 °C (PA 6-GV) zu Prüfkörpern verarbeitet und anhand des UL 94-Tests (Underwriter Laboratories) auf Flammwidrigkeit geprüft und klassifiziert.

Tabelle 1 zeigt Vergleichsbeispiele, in denen die Aluminiumsalze des 1-Hydroxy-1H-phospholan-1-oxids als alleinige Flammschutzmittelkomponenten (Komponente A) bzw. in Kombination mit stickstoffhaltigen Synergisten (Komponenten A+C) in glasfaserverstärktem PBT bzw. PA 6 geprüft wurden.

Tabelle 2 zeigt erfindungsgemäße Beispiele, in denen das Aluminiumsalz des 1-Hydroxy-1H-phospholan-1-oxids allein bzw. mit stickstoffhaltigen Synergisten in Kombination mit in geringen Mengen wirksamen Verbindungen (Komponenten A+B bzw. Komponenten A+B+C ) in glasfaserverstärktem PBT bzw. PA 6 geprüft wurde. Alle Mengen sind als Gew.-% angegeben und beziehen sich auf das fertige Polymercompound einschließlich Flammschutzausrüstung.

Aus den Beispielen geht hervor, daß die erfindungsgemäßen Zusätze (Komponente B) in der Kombination mit Metallsalzen der 1-Hydroxy-dihydrophosphol-oxide und der 1-Hydroxyphospholanoxide eine eindeutige Steigerung des Flammschutzeffekts bewirken, wenn sie in entsprechenden Mengen zugemischt werden. Auch synergistische Kombinationen aus den Metallsalzen der 1-Hydroxy-dihydrophosphol-oxide und der 1-Hydroxyphospholanoxide und stickstoffhaltigen Verbindungen (Komponenten A+C) werden durch Zugabe einer gewissen Menge an Komponente B in ihrer flammhemmenden Wirksamkeit erheblich verbessert Die Flammschutzmittelmenge bezogen auf das fertige Polymercompound, die nötig ist, um eine V-0, V-1 bzw. V-2 Einstufung zu erreichen, kann in der Kombination A+B gegenüber A allein bzw. A+B+C gegenüber A+C verringert werden.

Tabelle 1

| Vergleichsbeispiele. PHOLAL allein bzw. in Kombination mit stickstoffhaltigen Synergisten in glasfaserverstärktem PBT bzw. PA 6. | | | |
|---|---|---|---|
| Polymer | PHOLAL [%] | Melamincyanurat [%] | Klasse nach UL 94 (1,6 mm) |
| PBT-GV | 20 | | V-1 |
| PBT-GV | 25 | | V-1 |
| PBT-GV | 10 | 10 | V-1 |
| PA 6-GV | 20 | | V-2 |
| PA 6-GV | 25 | | V-2 |
| PA 6-GV | 11 | 11 | V-2 |

Tabelle 2

| Beispiele. PHOLAL allein bzw. mit stickstoffhaltigen Synergisten in Kombination mit in geringen Mengen wirksamen Verbindungen in glasfaserverstärktem PBT bzw. PA6. | | | | | | | |
|---|---|---|---|---|---|---|---|
| Polymer | PHOLAL [%] | Melamincyanurat [%] | CEEPRE E [%] | DHT Exm [%] | Zinkborat [%] | Zinkoxid [%] | Klasse nach UL 94 (1,6 mm) |
| PBT-GV | 20 | | 2 | | | | V-0 |
| PBT-GV | 20 | | | 1 | | | V-0 |
| PBT-GV | 20 | | | | | | V-0 |

Tabelle 2 (fortgesetzt)

| Beispiele. PHOLAL allein bzw. mit stickstoffhaltigen Synergisten in Kombination mit in geringen Mengen wirksamen Verbindungen in glasfaserverstärktem PBT bzw. PA6. | | | | | | | |
|---|---|---|---|---|---|---|---|
| Polymer | PHOLAL [%] | Melamincyanurat [%] | CEEPRE E [%] | DHT Exm [%] | Zinkborat [%] | Zinkoxid [%] | Klasse nach UL 94 (1,6 mm) |
| PBT-GV | 20 | | | | 1 | | V-0 |
| PBT-GV | 20 | | | | | 1 | V-0 |
| PBT-GV | 10 | 8 | | | 2 | | V-0 |
| PA 6-GV | 20 | | | | 2 | | V-0 |
| PA 6-GV | 10 | 10 | | | 2 | | V-0 |

## Patentansprüche

**1.** Flammschutzmittel-Kombination für thermoplastische Polymere, die als Komponente A ein Salz von 1-Hydroxy-dihydrophospholoxiden gemäß der Formel (Ia) oder Formel (Ib) und/oder 1-Hydroxyphospholanoxiden gemäß der Formel (II) enthält,

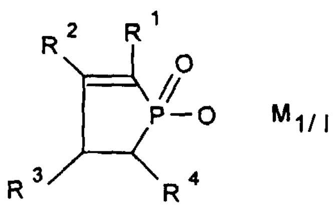

(Ia)

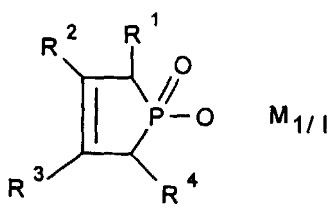

(Ib)

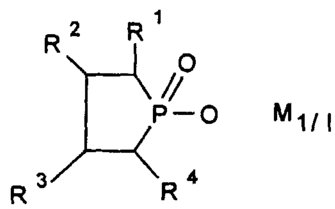

(II)

worin

| | |
|---|---|
| $R^1$ bis $R^4$ | gleich oder verschieden sind und Wasserstoff oder $C_1$-$C_{12}$-Alkyl, linear oder verzweigt; |
| M | ein Metall aus der zweiten oder dritten Haupt- oder Nebengruppe des Periodensystems; |
| l | die Zahlen 1, 2 oder 3 |

bedeuten und als Komponente B eine synthetische anorganische Verbindung und/oder ein mineralisches Produkt enthält.

**2.** Flammschutzmittel-Kombination nach Anspruch 1, dadurch gekennzeichnet, daß $R^1$ bis $R^4$ gleich oder verschieden sind und Wasserstof und/oder $C_1$-$C_4$-Alkyl, linear oder verzweigt, bedeuten.

**3.** Flammschutzmittel-Kombination nach Anspruch 1 oder 2, dadurch gekennzeichnet, daß $R^1$ bis $R^4$ gleich oder verschieden sind und Methyl oder Ethyl bedeuten.

**4.** Flammschutzmittel-Kombination nach einem oder mehreren der Ansprüche 1 bis 3, dadurch gekennzeichnet, daß es sich bei dem Metall um Magnesium, Calcium, Zink und/oder Aluminium handelt.

**5.** Flammschutzmittel-Kombination nach einem oder mehreren der Ansprüche 1 bis 4, dadurch gekennzeichnet, daß es sich bei der Komponente B um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen handelt.

**6.** Flammschutzmittel-Kombination nach Anspruch 5, dadurch gekennzeichnet, daß es sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver handelt.

**7.** Flammschutzmittel-Kombination nach Anspruch 5, dadurch gekennzeichnet, daß es sich bei dem Magnesiumverbindungen um Magnesiumhydroxid, Hydrotalcite, Magnesium-Carbonate oder Magnesium-Calcium-Carbonate handelt.

**8.** Flammschutzmittel-Kombination nach Anspruch 5, dadurch gekennzeichnet, daß es sich bei den Zinkverbindungen um Zinkoxid, -stannat, -hydroxystannat, -phosphat, -borat oder -sulfide handelt.

**9.** Flammschutzmittel-Kombination nach Anspruch 5, dadurch gekennzeichnet, daß es sich bei den Aluminiumverbindungen um Aluminiumhydroxid oder -phosphat handelt.

**10.** Flammschutzmittel-Kombination nach einem oder mehreren der Ansprüche 1 bis 9, dadurch gekennzeichnet, daß sie als weitere Komponente C Stickstoffverbindungen enthält.

**11.** Flammschutzmittel-Kombination nach Anspruch 10, dadurch gekennzeichnet, daß es sich bei den Stickstoffverbindungen um solche der Formeln (III) bis (VIII) oder Gemische davon

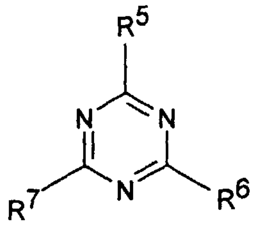

(III)

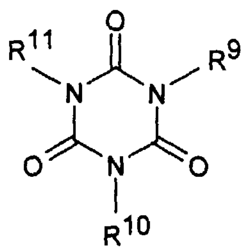

(IV)

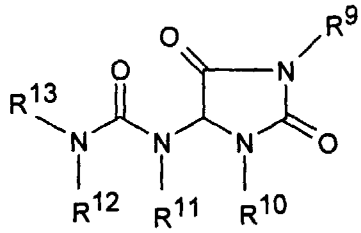

(V)

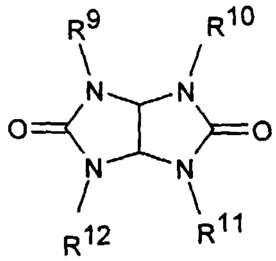

(VI)

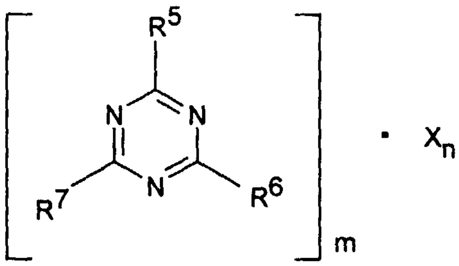

(VII)

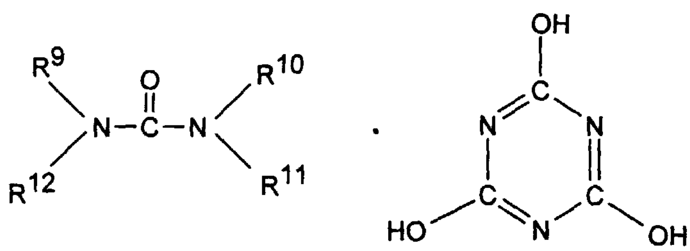

(VIII)

worin

| | |
|---|---|
| $R^5$ bis $R^7$ | Wasserstoff, $C_1$-$C_8$-Alkyl, $C_5$-$C_{16}$-Cycloalkyl oder -Alkylcycloalkyl, möglicherweise substituiert mit einer Hydroxy- oder einer $C_1$-$C_4$-Hydroxyalkyl-Funktion, $C_2$-$C_8$-Alkenyl, $C_1$-$C_8$-Alkoxy, -Acyl, -Acyloxy, $C_6$-$C_{12}$-Aryl oder -Arylalkyl, $-OR^8$ und $-N(R^8)R^9$, sowie N-alicyclisch oder N-aromatisch, |
| $R^8$ | Wasserstoff, $C_1$-$C_8$-Alkyl, $C_5$-$C_{16}$-Cycloalkyl oder -Alkylcycloalkyl, möglicherweise substituiert mit einer Hydroxy- oder einer $C_1$-$C_4$-Hydroxyalkyl-Funktion, $C_2$-$C_8$-Alkenyl, $C_1$-$C_8$-Alkoxy, -Acyl, -Acyloxy oder $C_6$-$C_{12}$-Aryl oder -Arylalkyl, |
| $R^9$ bis $R^{13}$ | die gleichen Gruppen wie $R^8$ sowie $-O-R^8$, |
| m und n | unabhängig voneinander 1, 2, 3 oder 4, |
| X | Säuren, die Addukte mit Triazinverbindungen (III) bilden können, bedeuten; |

oder um oligomere Ester des Tris(hydroxyethyl)isocyanurats mit aromatischen Polycarbonsäuren oder um stickstoffhaltige Phosphate der Formeln $(NH_4)_y H_{3-y} PO_4$ bzw. $(NH_4 PO_3)_z$, mit y gleich 1 bis 2 und z gleich 1 bis 10.000 handelt.

**12.** Flammschutzmittel-Kombination nach Anspruch 10 oder 11, dadurch gekennzeichnet, daß es sich bei der Komponente C um Benzoguanamin, Tris(hydroxyethyl)isocyanurat, Allantoin, Glycouril, Melamin, Melamincyanurat, Melaminphosphat, Dimelaminphosphat und/oder Melaminpyrophosphat handelt.

**13.** Verwendung einer Flammschutzmittel-Kombination gemäß einem oder mehreren der Ansprüche 1 bis 12 zur flammfesten Ausrüstung von thermoplastischen Polymeren.

**14.** Verwendung nach Anspruch 13, dadurch gekennzeichnet, daß es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) handelt.

**15.** Verwendung nach Anspruch 13, dadurch gekennzeichnet, daß es sich bei den thermoplastischen Polymeren um Polyamid, Polyester und ABS handelt.

**16.** Verwendung einer Flammschutzmittel-Kombination gemäß einem oder mehreren der Ansprüche 13 bis 15, dadurch gekennzeichnet, daß die Komponenten A und B unabhängig voneinander jeweils in einer Konzentration von 1 bis 30 Gew.-%, bezogen auf die Kunststoff-Formmasse, eingesetzt werden.

**17.** Flammfest ausgerüstete Kunststoff-Formmasse, enthaltend eine Flammschutzmittel-Kombination gemäß einem oder mehreren der Ansprüche 1 bis 12.

**18.** Flammfest ausgerüstete Kunststoff-Formmasse gemäß Anspruch 17, dadurch gekennzeichnet, daß es sich bei dem Polymeren um Polyamid, Polyester und ABS handelt.

Europäisches Patentamt

# EUROPÄISCHER RECHERCHENBERICHT

Nummer der Anmeldung
EP 00 10 0223

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y,D | EP 0 794 191 A (HOECHST AG) 10. September 1997 (1997-09-10) * Seite 4, Zeile 33 - Seite 5, Zeile 5; Ansprüche * | 1-5,9, 13,15-18 | C08K5/5313 C08K3/32 C08K3/34 C08K5/19 C08K5/3472 C08K5/3477 |
| Y | DE 197 08 726 A (HOECHST AG) 10. September 1998 (1998-09-10) * Ansprüche; Beispiele * | 1-5,9, 13,15-18 | |
| A,D, P | EP 0 899 296 A (CLARIANT GMBH) 3. März 1999 (1999-03-03) * Ansprüche; Beispiele * | 1-18 | |
| A | DE 196 14 424 A (HOECHST AG) 16. Oktober 1997 (1997-10-16) * Ansprüche; Beispiele * | 1-18 | |

RECHERCHIERTE SACHGEBIETE (Int.Cl.7)

C08K

Der vorliegende Recherchenbericht wurde für alle Patentansprüche erstellt

| Recherchenort | Abschlußdatum der Recherche | Prüfer |
|---|---|---|
| DEN HAAG | 28. April 2000 | Friederich, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 00 10 0223

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2000

| Im Recherchenbericht angeführtes Patentdokument | Datum der Veröffentlichung | Mitglied(er) der Patentfamilie | Datum der Veröffentlichung |
|---|---|---|---|
| EP 0794191 A | 10-09-1997 | DE 19608011 A | 11-09-1997 |
| | | BR 9701157 A | 15-12-1998 |
| | | CN 1168381 A | 24-12-1997 |
| | | JP 9278784 A | 28-10-1997 |
| DE 19708726 A | 10-09-1998 | WO 9839381 A | 11-09-1998 |
| | | EP 0964886 A | 22-12-1999 |
| EP 0899296 A | 03-03-1999 | DE 19737727 A | 08-07-1999 |
| | | AU 8197298 A | 11-03-1999 |
| | | CA 2246124 A | 28-02-1999 |
| | | JP 11140228 A | 25-05-1999 |
| | | NO 983903 A | 01-03-1999 |
| DE 19614424 A | 16-10-1997 | AU 711202 B | 07-10-1999 |
| | | AU 2293997 A | 07-11-1997 |
| | | CA 2250995 A | 23-10-1997 |
| | | WO 9739053 A | 23-10-1997 |
| | | EP 0892829 A | 27-01-1999 |
| | | NO 984726 A | 30-11-1998 |

EPO FORM P0461

Für nähere Einzelheiten zu diesem Anhang : siehe Amtsblatt des Europäischen Patentamts, Nr.12/82